# EUROPÄISCHE PATENTANMELDUNG

(11) **EP 0 950 589 A2**
(43) Veröffentlichungstag der Anmeldung: **20.10.1999**
(21) Anmeldenummer: 99105536.9
(22) Anmeldetag: 18.03.1999
(51) Int. Cl.: B60T 1/00

(54) **Blockiereinrichtung für ein Fahrzeug**

(30) Priorität: 16.04.1998 DE 19816801
(71) Anmelder: DaimlerChrysler AG, 70567 Stuttgart (DE)
(72) Erfinder: Fleischer, Horst, 74348 Lauffen (DE)

(57) **Zusammenfassung**

Eine Blockiereinrichtung für ein Fahrzeug umfassend ein mit einem Fahrzeugrad drehfest verbundenes erstes Blockierelement (30) und ein ansteuerbares zweites Blockierelement (20), welches mit dem ersten Blockierelement in lösbaren Eingriff bringbar ist, ist dadurch gekennzeichnet, daß das erste Blockierelement eine mit Ausnehmungen versehene Bremsscheibe ist und daß das zweite Blockierelement eine durch ein ansteuerbares Betätigungsmittel entgegen der Rückstellkraft eines Rückstellmittels betätigbare Sperrklinke ist, die in die Ausnehmung der Bremsscheibe eingreift.

## Beschreibung

Die Erfindung betrifft eine Blockiereinrichtung für ein Fahrzeug umfassend ein mit einem Fahrzeugrad drehfest verbundenes erstes Blockierelement und ein ansteuerbares zweites Blockierelement, welches mit dem ersten Blockierelement in lösbaren Eingriff bringbar ist.

Derartige Blockiereinrichtungen für Fahrzeuge werden dazu verwendet, das Fahrzeug in seiner Parkposition gegen ein unbeabsichtigtes Wegrollen zu sichern.

Aus der WO 93/09981 geht beispielsweise ein Hilfs-Notbremssystem für Automobile hervor, bei dem koaxial zur Antriebswelle ein Ratschenelement vorgesehen ist, in welches über ein Solenoid eine Sperrklinke zum lösbaren Eingriff gebracht werden kann. Eine derartige Einrichtung erfordert koaxial zur Radachse einen verhältnismäßig großen Bauraum, der insbesondere bei technisch aufwendigen Radaufhängungen in vielen Fällen nicht zur Verfügung steht.

Aus der US 2 966 244 geht eine Blockiereinrichtung für Automobile hervor, bei welcher auf der Antriebswelle eine Scheibe angeordnet ist, welche Einschnitte aufweist, in die auf mechanischem Wege ein Klinkenelement einrastbar ist.

Aus der US 5 170 869 geht eine Parksperre für ein Automatikgetriebe hervor, bei welchem ebenfalls ein Klinkenelement in ein mit Ausnehmungen versehenes Rad eingreift. Derartige Feststelleinrichtungen sichern ein Fahrzeug gegen ein unbeabsichtigtes Wegrollen nur dann, wenn eine Verbindung zwischen der Antriebswelle und den Rädern gegeben ist, was beispielsweise in der Parkstellung bei Automatikgetrieben der Fall ist. Eine derartige Blockiereinrichtung kann darüber hinaus nur auf die angetriebenen Räder wirken. Eine Blockierung der nicht angetriebenen Räder ist dagegen nicht möglich.

Aus der DE 89 03 391 U1 ist ferner eine Blockiereinrichtung für ein Fahrzeug bekannt, bei welcher ein Ratschenrad in drehfester Verbindung mit einem Fahrzeugrad steht. Eine Sperrklinke ist zum lösbaren Eingriff in das Ratschenrad vorgesehen. Die Sperrklinke wird durch ein mit der Sperrklinke verbundenes Solenoid betätigt. Dadurch, daß bei dieser Einrichtung das Fahrzeugrad bei sich im Eingriff befindlicher Sperrklinke nur entgegen dem Uhrzeigersinn, bei außer Eingriff gebrachter Sperrklinke jedoch frei drehbar ist, wird eine Sicherung gegen Wegrollen beispielsweise am Berg nur in eine Richtung, beispielsweise bei einer bergaufwärts gerichteten Parkposition, jedoch nicht bei einer bergabwärts gerichteten Parkposition des Fahrzeugs erreicht.

Aufgabe der Erfindung ist es, eine Blockiereinrichtung für ein Fahrzeug derart weiterzubilden, daß diese bei einem möglichst kompakten Aufbau und mit möglichst wenig an dem Fahrzeugrad anzuordnender Teile eine optimale Blockierung des Fahrzeugs gegen ein Wegrollen in beliebige Richtungen ermöglicht.

Diese Aufgabe wird bei einer Blockiereinrichtung für ein Fahrzeug der eingangs beschriebenen Art erfindungsgemäß dadurch gelöst, daß das erste Blockierelement eine mit Ausnehmungen versehene Bremsscheibe ist und daß das zweite Blockierelement eine durch ein ansteuerbares Betätigungsmittel entgegen der Rückstellkraft eines Rückstellmittels betätigbare Sperrklinke ist, die in die Ausnehmungen der Bremsscheibe eingreift.

Dadurch, daß als erstes Blockierelement eine mit Ausnehmungen versehene Bremsscheibe verwendet wird, in die das als Sperrklinke ausgebildete zweite Blockierelement eingreift, wird nicht nur ein kompakter Aufbau der Blokiereinrichtung ermöglicht, es können durch Verwendung der Bremsscheibe auch zusätzliche Bauteile zur Ausbildung der Blockierwirkung entfallen. Vorteilhaft ist auch, daß eine derartige kompakte Blockiereinrichtung bei bestehenden Fahrzeugen nachrüstbar ist.

Vorteilhafterweise ist vorgesehen, daß die Ausnehmungen im wesentlichen komplementär zu Klinkenelementen der Sperrklinke ausgebildet sind. Auf diese Weise wird nicht nur ein leichtes Einrasten der Klinke in die Ausnehmungen ermöglicht, sondern auch eine optimale Blockierung im eingerückten Zustand der Sperrklinke.

Eine vorteilhafte Ausführungsform sieht dabei vor, daß seitliche Begrenzungsflächen der Ausnehmung und Klinkenelemente wenigstens teilweise derart angeschrägt sind, daß die Ausnehmungen und Klinkenelemente einen sich zur Radachse verjüngenden Bereich aufweisen. Durch das Anschrägen der Klinkenelemente und der Ausnehmungen wird ein besonders optimales Ein- und Ausrücken der Sperrklinke in die Ausnehmung der Bremsscheibe ermöglicht.

Bei einer besonders vorteilhaften Ausführungsform ist vorgesehen, daß die Ausnehmungen durch Zwischenraume zwischen Verbindungsstegen einer innenbelüfteten Bremsscheibe gebildet werden, wobei die Verbindungsstege die Ausnehmungen seitlich begrenzen. In diesem Falle können konventionelle innenbelüftete Bremsscheiben als erste Blockierelemente verwendet werden. In diesem Falle müssen lediglich noch die Sperrklinken und deren Betätigungsmittel, beispielsweise am Bremsträger angeordnet, vorgesehen werden.

Insbesondere hinsichtlich eines besonders kompakten Aufbaus ist bei einer vorteilhaften Ausführungsform vorgesehen, daß das Betätigungsmittel einen an einem Bremsträger befestigten von einem ansteuerbaren Antriebsmittel antreibbaren und durch ein Federmittel vorgespannten Exzenterantrieb umfaßt. Ein solcher Exzenterantrieb erfordert, wie weiter unten näher ausgeführt wird, nur einen sehr kleinen Bauraum und ist daher auch geeignet, an technisch sehr aufwendigen Radaufhängungen, bei denen in den meisten Fällen nur ein kleiner Bauraum für die Bremse zur Verfügung steht, eingesetzt zu werden.

Das Antriebsmittel kann rein prinzipiell auf die unterschiedlichste Art und Weise ausgebildet sein.

Bei einer vorteilhaften Ausführungsform ist vorgesehen, daß das Antriebsmittel ein Elektromotor ist.

Bei einer anderen vorteilhaften Ausführungsform ist das Antriebsmittel ein Hydraulikzylinder.

Der Exzenterantrieb umfaßt vorteilhafterweise ein durch das Antriebsmittel über einen Schneckenantrieb antreibbares Exzenterrad, dessen Drehbewegung über eine Spiralfeder auf eine Buchse und von dieser auf einen zum Exzenterrad exzentrisch gelagerten Zapfen derart übertragbar ist, daß eine Bewegung des Zapfens in einer in der Sperrklinke vorgesehenen langlochartigen Ausnehmung zu einer Ein- und Ausklinkbewegung der an einem Drehpunkt drehbeweglich gelagerten Sperrklinke führt.

Weitere Vorteile und Merkmale der Erfindung sind Gegenstand der nachfolgenden Beschreibung sowie der zeichnerischen Darstellung einiger Ausführungsbeispiele.

In der Zeichnung zeigen:
- Fig. 1: schematisch eine von der Erfindung Gebrauch machende Blockiereinrichtung für ein Fahrzeug in Draufsicht;
- Fig. 2: eine entlang der Linie II-II in Fig. 1 geschnittene Darstellung der Blockiereinrichtung;
- Fig. 3: eine entlang der Linie III-III der Fig. 2 geschnittene Darstellung der Blockiereinrichtung;
- Fig. 4: eine entlang der Linie IV-IV der Fig. 2 geschnittene Darstellung der Blockiereinrichtung;
- Fig. 5: eine entlang der Linie V-V der Fig. 2 geschnittene Darstellung der Blockiereinrichtung;
- Fig. 6: eine Sperrklinke in räumlicher Darstellung;
- Fig. 7: geschnitten ein weiteres Ausführungsbeispiel einer von der Erfindung Gebrauch machenden Blockiereinrichtung für ein Fahrzeug und
- Fig. 8: teilweise geschnitten das Zusammenwirken der Sperrklinke mit einer Bremsscheibe eines Fahrzeugs.

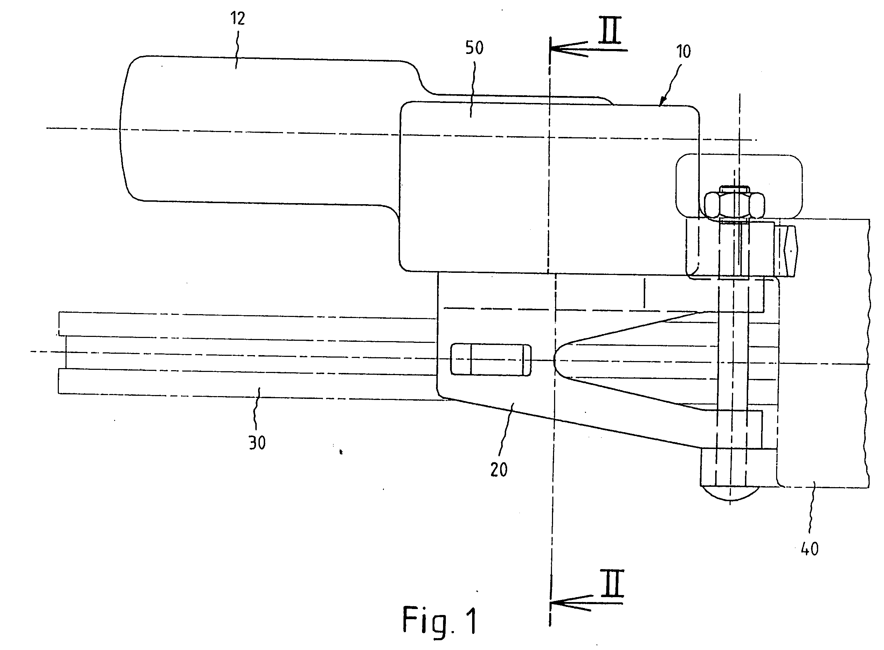

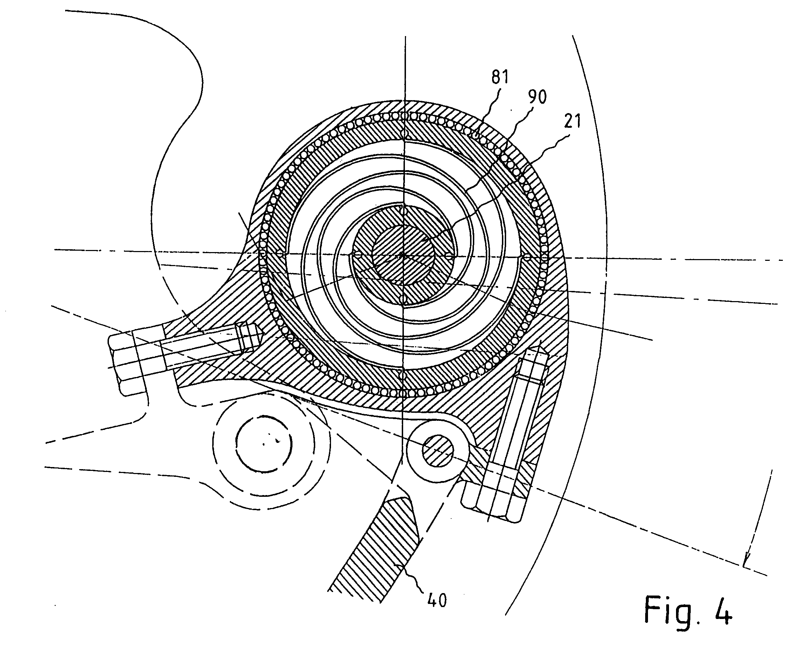

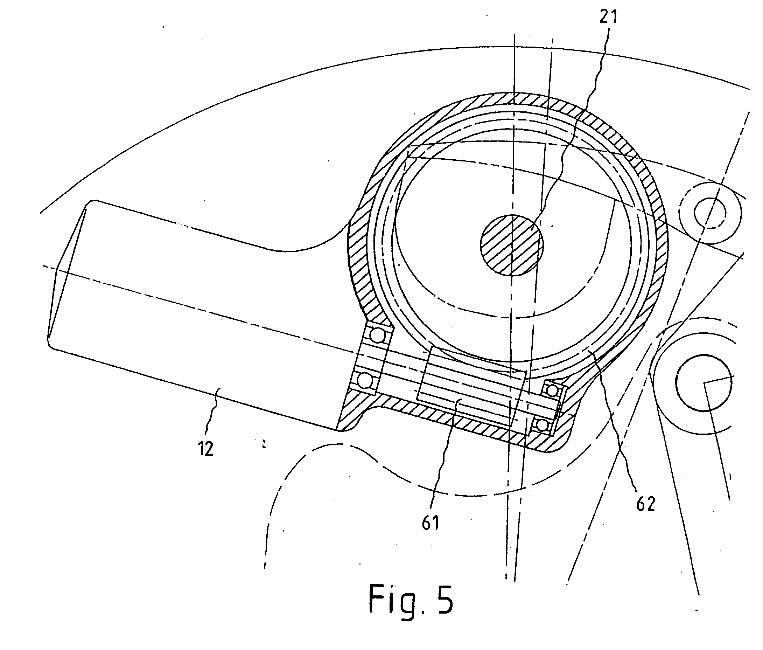

Ein Ausführungsbeispiel einer Blockiereinrichtung eines Fahrzeugs dargestellt in Fig. 1 bis Fig. 5 umfaßt eine von einem Betätigungsmittel 10 betätigbare Sperrklinke 20, welche entgegen einer Vorspannung in Ausnehmungen einer Bremsscheibe 30 eingreift. Die Sperrklinke 20 ist genauso wie das Betätigungsmittel 10 beispielsweise an einem Bremsträger 40 befestigt.

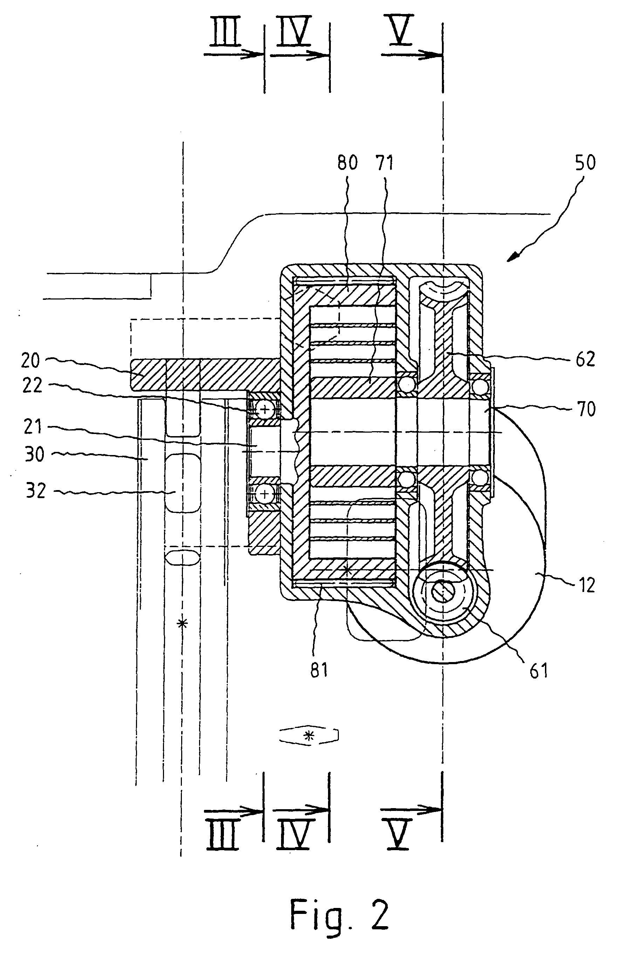

Das Betätigungsmittel 10 umfaßt einen ansteuerbaren Elektromotor 12 und einen Exzenterantrieb 50, der nachfolgend in Verbindung mit Fig. 2 bis Fig. 5 näher erläutert wird.

Wie aus Fig. 2, 4 und 5 hervorgeht, umfaßt der Exzenterantrieb 50 einen durch den Elektromotor 12 angetriebenen Schneckenantrieb, umfassend eine Schnecke 61, welche über ein in die Schnecke 61 eingreifendes Antriebselement 62 eine Welle 70 in eine Drehung versetzt.

Mit der Welle 70 verbunden ist eine Buchse 71, welche die Drehbewegung auf ein Exzenterrad 80, welches durch Nadellager 81 im Gehäuse 51 des Exzenterantriebs 50 gelagert ist, überträgt.

Zwischen der Buchse 71 und dem Exzenterrad 80 ist eine spindelartig ausgebildete Feder 90 vorgesehen, welche eine "weiche" Übertragung des Drehmoments von der Schnecke 61 über die Welle 70 und die Buchse 71 auf das Exzenterrad 80 ermöglicht.

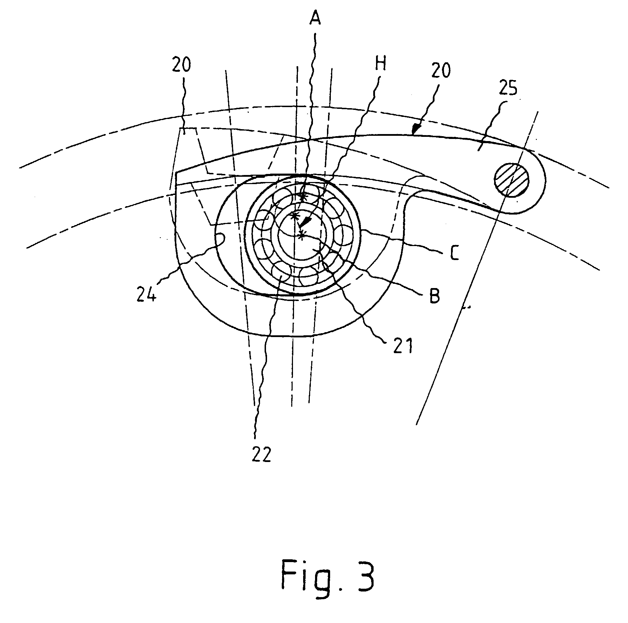

Exzentrisch zu der Welle 70 ist ein mit der Sperrklinke 20 starr verbundener Exzenterlagerzapfen 21 angeordnet, der durch das Exzenterrad 80 antreibbar ist. Konzentrisch zu dem Exzenterzapfen 21 ist ein Nadellager 22 angeordnet, das über den Zapfen 21 vom Exzenterrad 80 angetrieben wird. Die Mitte des Lagers 22 und damit die Sperrklinke 20 beschreiben dabei etwas mehr als einen Halbkreis H, wie es in Fig. 3 schematisch dargestellt ist.

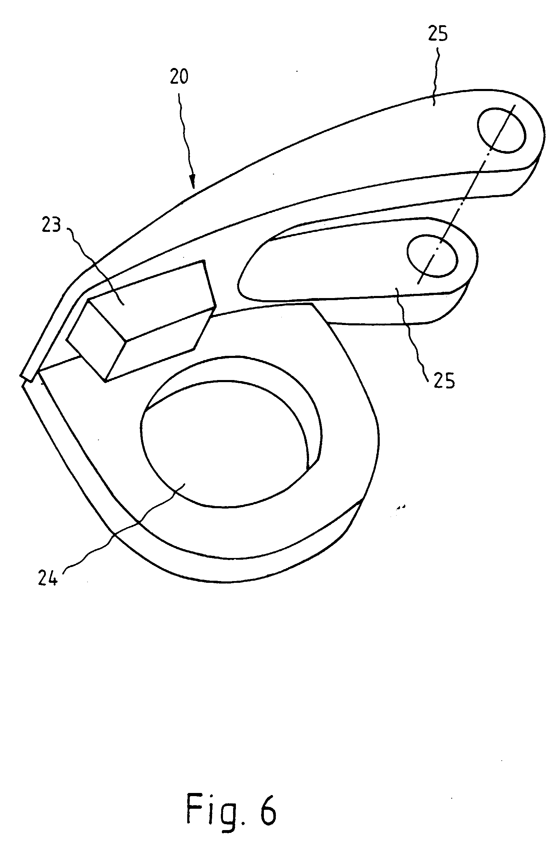

Wie aus Fig. 3 sowie Fig. 6 hervorgeht, umfaßt die Sperrklinke 20 ein Klinkenelement 23 sowie eine langlochartige Ausnehmung 24, in welcher der Exzenterzapfen 21 über das Lager 22 verschieblich geführt ist. Die Sperrklinke 20 umfaßt ferner zwei Befestigungsarme 25, über welche sie an einem Bremsträger 40 drehbeweglich befestigbar ist.

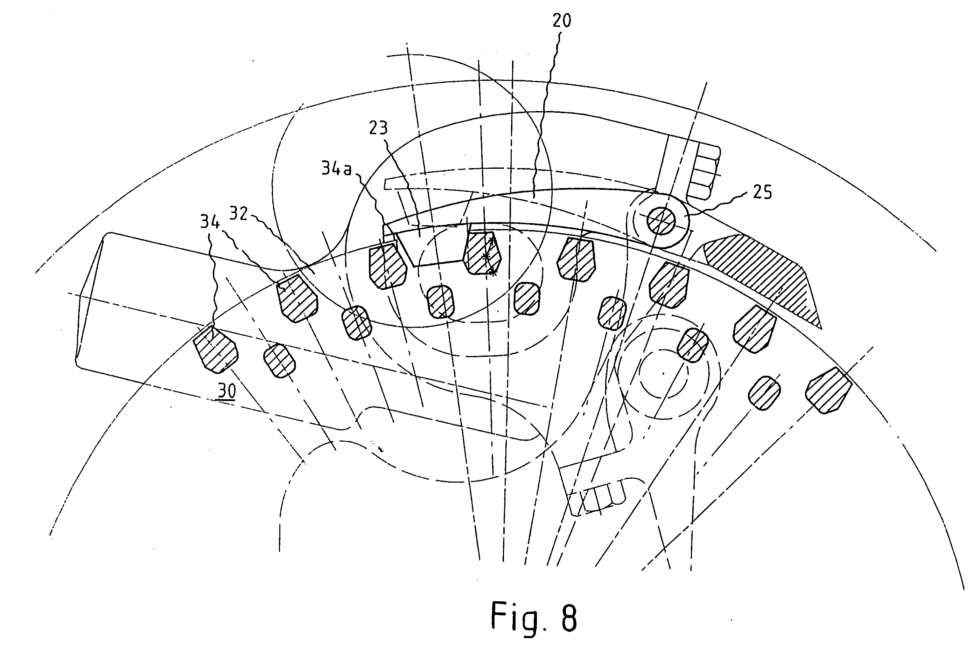

Das Ein- und Ausrücken des Klinkenelements 23 in Öffnungen 32 einer Bremsscheibe 30 (vergl. Fig. 8) wird durch die Bewegung des Exzenterlagerzapfens 21 und des ihn umgebenden Lagers 22 in der langlochartigen Ausnehmung 24 dadurch bewirkt, daß die Mitte des Lagers 22 - wie oben bereits erwähnt - etwas mehr als eine halbkreisförmige Bewegung ausführt, bis das Lager 22 (rechts am Langlochende) an einem Punkt C anschlägt, wobei dem Punkt A die Fahrstellung, d.h. ein ausgerückter Zustand der Sperrklinke 20 und dem Punkt B eine Blockierstellung, d.h. eine maximal eingerückte Stellung der Sperrklinke 20 entspricht.

Wie aus Fig. 8 hervorgeht, kann beispielsweise eine an sich bekannte innenbelüftete Bremsscheibe 30 als Blockierelement verwendet werden, wobei die Zwischenräume zwischen den Verbindungsstegen 34 die Funktion der Ausnehmungen 32 übernehmen. Die Verbindungsstege 34 können an ihrer der Sperrklinke 20 zugewandten Seite sich zur Radachse verjüngend angeschrägte Flächen 34a aufweisen, in die das Klinkenelement 33, welches ebenfalls zur Radachse verjüngend angeschrägte Flächen 23a aufweist, eingreift. Durch die Anschrägung der seitlichen Begrenzungsflächen der Ausnehmungen 32, d.h. durch die Anschrägung der Verbindungsstege 34 sowie des Klinkenelements 23 wird ein optimales Ein- und Ausrücken der Sperrklinke ermöglicht. Im eingerückten Zustand sichert die Blockiereinrichtung ein Wegrollen des Fahrzeugs sowohl in Vorwärts- als auch in Rückwärtsrichtung.

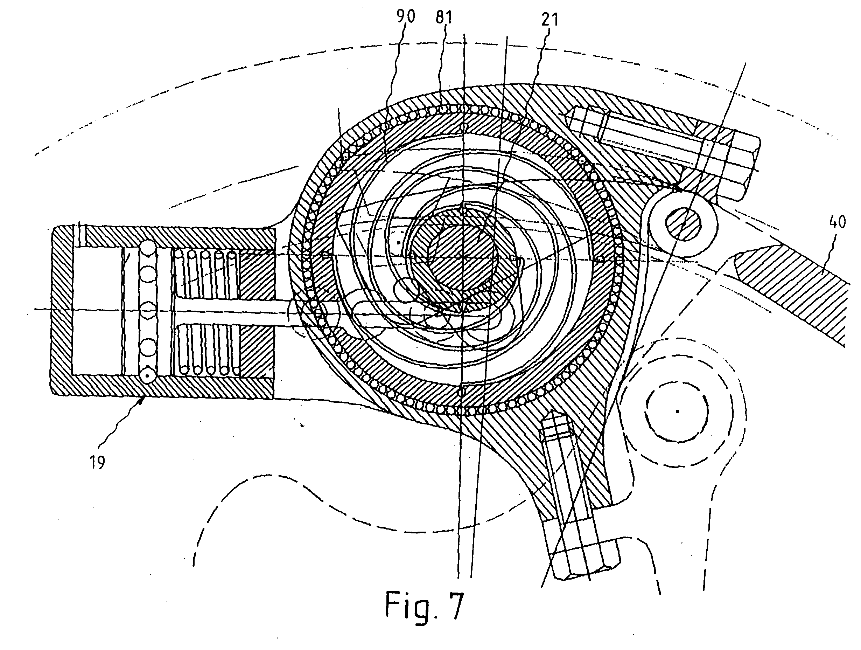

Ein anderes, in Fig. 7 dargestelltes Ausführungsbeispiel einer Blockiereinrichtung unterscheidet sich von dem in Verbindung mit Fig. 1 bis Fig. 6 dargestellten Ausführungsbeispiel nur dadurch, daß der Exzenterantrieb 50 statt mittels eines Elektromotors 12 mittels eines Hydraulikzylinders 19 bewerkstelligt wird. Hinsichtlich der übrigen Elemente der Blockiereinrichtung wird vollinhaltlich auf die obigen Ausführungen Bezug genommen.

Die oben beschriebene Blockiereinrichtung kann rein prinzipiell an sämtlichen Rädern eines Fahrzeugs vorgesehen sein. Vorteilhafterweise ist sie zusätzlich zu einer ohnehin in den meisten Fällen auf die Hinterräder wirkende Feststellbremse zusätzlich an den Vorderrädern als zusätzliche elektrisch oder hydraulisch betätigbare Feststellbremse angeordnet. Auf diese Weise wird ein Fahrzeug gegen Wegrollen gleichmäßig an allen vier Rädern gesichert. Dies ist insbesondere bei schweren Nutzfahrzeugen von großem Vorteil, da es sich gezeigt hat, daß die Sicherung lediglich von zwei Rädern eines Fahrzeugs in vielen Fällen nicht ausreichend ist.

## Patentansprüche

1. Blockiereinrichtung für ein Fahrzeug umfassend ein mit einem Fahrzeugrad drehfest verbundenes erstes Blokierelement und ein ansteuerbares zweites Blockierelement, welches mit dem ersten Blockierelement (30) in lösbaren Eingriff bringbar ist, dadurch gekennzeichnet, daß das erste Blockierelement eine mit Ausnehmungen (32) versehene Bremsscheibe (30) ist und daß das zweite Blockierelement eine durch ein ansteuerbares Betätigungsmittel entgegen der Rückstellkraft eines Rückstellmittels (90)betätigbare Sperrklinke (20) ist, die in die Ausnehmung (32) der Bremsscheibe (30) eingreift.

2. Blockiereinrichtung nach Anspruch 1, dadurch gekennzeichnet, daß die Ausnehmungen (32)im wesentlichen komplementär zu Klinkenelementen (23) der Sperrklinke (20) ausgebildet sind.

3. Blockiereinrichtung nach Anspruch 1, dadurch gekennzeichnet, daß seitliche Begrenzungsflächen der Ausnehmungen (32) und der Klinkenelemente (23) wenigstens teilweise derart angeschrägt sind, daß die Ausnehmungen (32) und die Klinkenelemente (23) einen sich zur Radachse verjüngenden Bereich aufweisen.

4. Blockiereinrichtung nach einem der voranstehenden Ansprüche, dadurch gekennzeichnet, daß die Ausnehmungen (32) durch Zwischenräume zwischen Verbindungsstegen (34) einer innenbelüfteten Bremsscheibe (30) gebildet werden, wobei die Verbindungsstege (34) die Ausnehmungen (32) seitlich begrenzen.

5. Blockiereinrichtung nach einem der voranstehenden Ansprüche, dadurch gekennzeichnet, daß das Betätigungsmittel einen an einem Bremsträger (40) und/oder Achsschenkel befestigten, von einem ansteuerbaren Antriebsmittel antreibbaren und durch ein Federmittel (90) vorgespannten Exzenterantrieb umfaßt.

6. Blockiereinrichtung nach Anspruch 5, dadurch gekennzeichnet, daß das Antriebsmittel ein Elektromotor (12) ist.

7. Blockiereinrichtung nach Anspruch 5, dadurch gekennzeichnet, daß das Antriebsmittel ein Hydraulikzylinder (19) ist.

8. Blockiereinrichtung nach einem der voranstehenden Ansprüche, dadurch gekennzeichnet, daß der Exzenterantrieb (50) umfaßt:
eine durch das Antriebsmittel (12; 19) über einen Schneckenantrieb (61, 62) über eine Buchse (71) und eine Spiralfeder (90) antreibbares Exzenterrad (80), dessen Drehbewegung auf einen exzentrisch gelagerten Exzenterzapfen (21) übertragen wird, derart, daß eine Bwegung des Exzenterzapfens (21) und ein den Exzenterzapfen (21) umgebendes Lager (22) in einer in der Sperrklinke (20) vorgesehenen langlochartigen Ausnehmung (24) zu einer Ein- und Ausklinkbewegung der an einem Drehpunkt drehbeweglich gelagerten Sperrklinke (20) führt.
